# EUROPEAN PATENT SPECIFICATION

(11) **EP 0 382 568 B1**
(45) Date of publication and mention of the grant of the patent: **15.06.1994**
(21) Application number: 90301416.5
(22) Date of filing: 09.02.1990
(51) Int. Cl.: H04N 3/15, H04N 1/18

(54) **Image sensor and photoelectric conversion apparatus using the same**
Bildsensor und photoelektrisches Umwandlungsgerät zur Anwendung desselben
Capteur d'image et appareil de conversion photoélectrique l'utilisant

(30) Priority: 10.02.1989 JP 30017/89; 10.04.1989 JP 87892/89
(43) Date of publication of application: 16.08.1990
(73) Proprietor: CANON KABUSHIKI KAISHA, Tokyo (JP)
(72) Inventor: Nakamura, Kenichi, Isehara-shi, Kanagawa-ken (JP); Ohzu, Hayao, Fuchu-shi, Tokyo (JP); Ueno, Isamu, Atsugi-shi, Kanagawa-ken (JP)
(74) Representative: Beresford, Keith Denis Lewis

(56) References cited:
- EP-A- 0 253 678
- EP-A- 0 260 956
- US-A- 4 593 319
- US-A- 4 819 070
- US-A- 4 831 451
- PATENT ABSTRACTS OF JAPAN, vol. 8, no. 272 (E-284)[1709], 13th December 1984;& JP-A-59 140 766 (FUJI XEROX K.K.) 13-08-1984

## Description

The present invention relates to an image sensor and a photoelectric conversion apparatus using the same and, more particularly, to an image sensor having a plurality of light-receiving elements and a photoelectric conversion apparatus having a plurality of image sensors each having an array of a plurality of light-receiving elements.

In recent years, various types of sensors have been commercially available along with developments of semiconductor technology, for example JP-A-64002354 (US-A-4 819 070).. One of these sensors extracts an electrical signal from each photosensor portion and performs image processing.

Conventional linear image sensors are very popular in facsimile machines, scanners, and digital copying machines. Such a linear image sensor is formed on a silicon wafer, and the sensor length is limited by the wafer size. It is difficult to form one image sensor having an array of a plurality of light-receiving elements, the overall length of which is equal to the length of an original. For this reason, an image on the original is reduced by impinging light reflected by the original on an optical system. A reduced image is projected on the linear image sensor, thus reading the original image.

A reader having the reduction optical system described above requires a large space for the optical system. In addition, it is difficult to obtain a sufficiently high resolution in this reader.

In order to solve this problem, a multi-chip image sensor having a one-dimensional array of a plurality of linear image sensors is used.

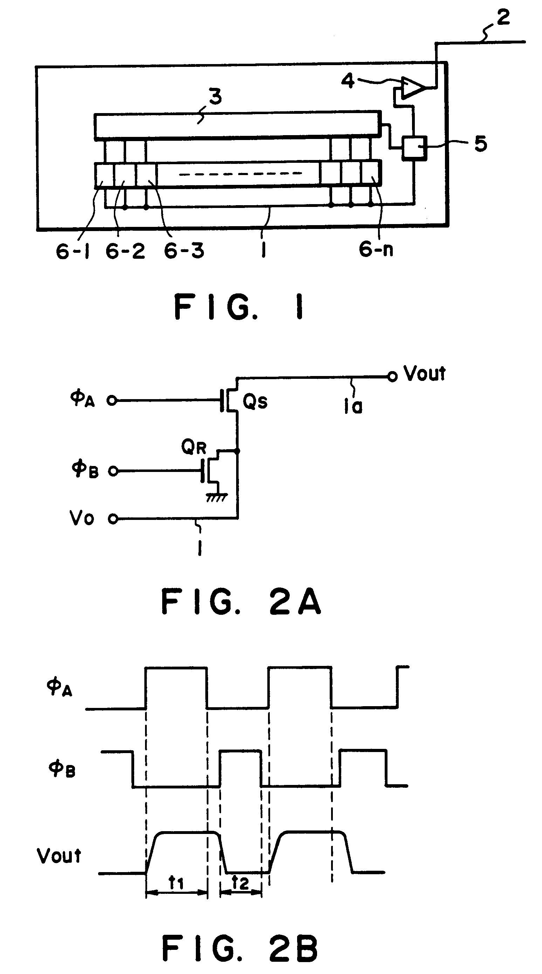

Fig. 1 is a view illustrating a circuit arrangement of a conventional image sensor.

As shown in Fig. 1, light signals from light-receiving elements 6-1 to 6-n are selected by a control circuit 3 in synchronism with fundamental clock pulses and are sequentially read and output to a common output line 1.

A signal output onto the output line 1 is input to a light signal amplifier 4 through a reset circuit 5. The reset circuit 5 alternately performs resetting and read access. A signal amplified by the light signal amplifier 4 is output onto a common output line 2.

Fig. 2A is a circuit diagram showing a detailed arrangement of the reset circuit. Fig. 2B is a timing chart of waveforms of signals for driving the reset circuit and a waveform of an output signal from the reset circuit.

Referring to Fig. 2A, a transistor QS is a transistor for reading out a pixel signal Vo from the output line 1 to an output line 1a as an output signal Vout. A transistor QR is a transistor for resetting the output line 1. A control signal øA is input to the gate electrode of the transistor QS, and a control signal øB independent of the control signal øA is input to the gate electrode of the transistor QR.

As shown in Fig. 2B, during a time interval t1 as an ON time of the signal øA, a pixel signal from the output line 1 is read and output to the output line 2 serving as an input line of the amplifier 4. During a time interval t2 as the ON time of the signal øB, the output line 1 is reset. In this manner, read access and resetting are alternately performed, and a duty ratio of the output signal becomes about 50%.

In the conventional example, however, since the pixel signals of each image sensor are synchronized with fundamental clock pulses, and read access and resetting are serially performed, the read signal has a maximum duty ratio of 50% or less. It is difficult to cope with fundamental clocks having higher frequencies.

When the number of pixels is increased and the sensor length is increased to obtain a higher resolution, a parasitic capacitance of a horizontal read line for reading a signal is increased, and read access of the light signal cannot be performed at a sufficiently high speed. The signal level is decreased, and an S/N ratio is also decreased. In order to solve these problems, multi-line read access is developed and used in some fields of practical applications.

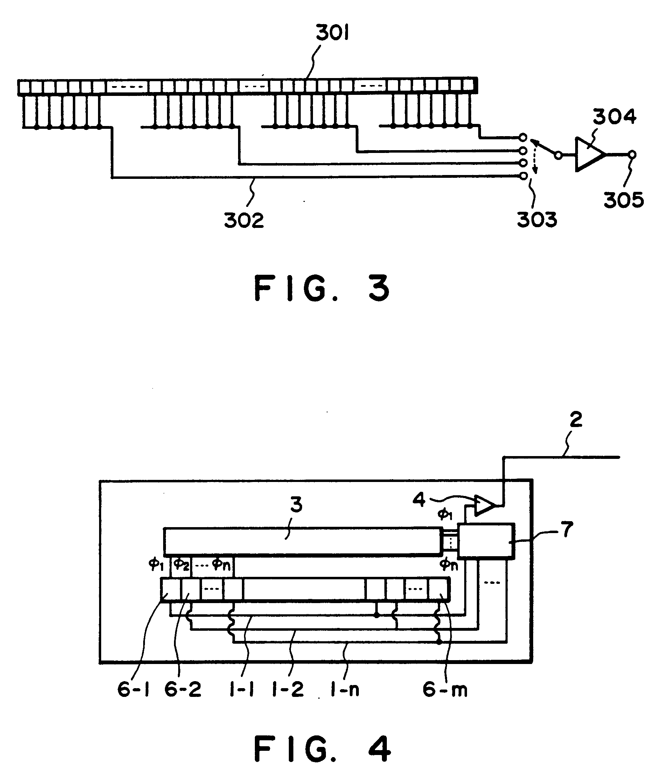

Fig. 3 is a schematic view showing an arrangement of a multi-line read system.

Referring to Fig. 3, a one-line sensor 301 is divided into a plurality of blocks, and signals of the sensor portions in each block are read and output onto a corresponding horizontal read line 302. Signals on the horizontal read line 302 are transferred to an output amplifier 304 through a switching means 303, and output signals are extracted from an output terminal 305.

In a multi-line read system, when the number of sensors for one line is increased, the number of blocks and the number of horizontal read lines must be increased, resulting in a complex circuit arrangement.

It is an object of the present invention to provide an image sensor and a photoelectric conversion apparatus using the same, wherein signal access of one of the output lines and resetting of one or two or more other output lines can be simultaneously performed, i.e., simultaneous operations of signal access and resetting can be achieved, so that 100% output read access can be performed and a clock signal having a high frequency can be used. This and other objects are achieved by the invention as defined in the claims.
Fig. 1 is a view showing a circuit arrangement of a conventional image sensor chip;
Fig. 2A is a circuit diagram showing a detailed arrangement of a reset circuit;
Fig. 2B is a timing chart showing waveforms of signals for driving the reset circuit and a waveform of an output signal therefrom;
Fig. 3 is a schematic view showing an arrangement of a multi-line read system;
Fig. 4 is a view showing an arrangement of an image sensor chip in a photoelectric conversion apparatus according to an embodiment of the present invention;
Fig. 5A is a circuit diagram showing an arrangement of an analog switch circuit having a reset circuit;
Fig. 5B is a timing chart showing waveforms of signals for driving the analog switch circuit and a waveform of an output signal from the analog switch circuit;
Fig. 6 is a schematic circuit diagram for explaining a photoelectric conversion apparatus according to another embodiment of the present invention;
Fig. 7 is a timing chart for explaining an operation of the sensor unit according to the present invention; and
Fig. 8 is a schematic arrangement of an image reader.

The present invention has been made to solve the conventional problems described above and achieve the above objects.

In an image sensor and a photoelectric conversion apparatus according to the present invention, pixel signals from a plurality of light-receiving elements are output to a plurality of output lines, and a switching means is turned on by one of the plurality of output lines to read output signals onto a common output line. At the same time, switching means for one or two or more other output lines are turned off to turn on a reset means. Therefore, the output lines other than the common output line are reset, thus simultaneously performing signal read access and resetting.

According to the present invention, an output line is divided into four output lines. Each divided output line is connected to every four sensor portions through four first-stage switching means to decrease a parasitic capacitance of each divided output line and increase read efficiency.

At the same time, two of the divided output lines are commonly connected through the corresponding two second-stage switching means, so that a time for reading signals from each sensor portion to each divided output line can be prolonged as compared with a conventional arrangement. Therefore, read efficiency can be further increased. Read efficiency can be increased without increasing the number of divided output lines, and complexity of the circuit arrangement can be prevented.

An embodiment of the present invention will be described in detail with reference to the accompanying drawings.

Fig. 4 illustrates a circuit of an image sensor in a photoelectric conversion apparatus according to a preferred embodiment of the present invention.

The same reference numerals as in Fig. 1 denote the same parts in Fig. 4.

As shown in Fig. 4, n-phase clock pulses ø1, ø2,..., øn of a fundamental clock signal are respectively supplied from a control circuit 3 to light-receiving elements 6-1, 6-2,..., 6-m (m = xn; x is an integer) and sensor signals are output onto independent output lines 1-1, 1-2,... 1-n, respectively.

The output lines 1-1, 1-2,..., 1-n are connected to an analog switch circuit 7 having a reset circuit. An output line for reading a signal to a light signal amplifier 4 and a resetting output line are selected by the n-phase clock pulses ø1, ø2,..., øn from the control circuit 3. Therefore, signal read access and resetting are simultaneously performed. A signal amplified by the light signal amplifier 4 is output onto a common output line 2. With this operation, signal read access having a duty ratio of 100% or almost 100% can be performed.

The plurality of output lines of the image sensor are arranged on one side of the array of the light-receiving elements. Therefore, the circuit arrangement can be simplified, the circuit area can be reduced, and the chip size can be reduced accordingly.

The arrangement of the analog switch circuit will be described below. For the sake of descriptive simplicity, two-phase clock pulses will be exemplified.

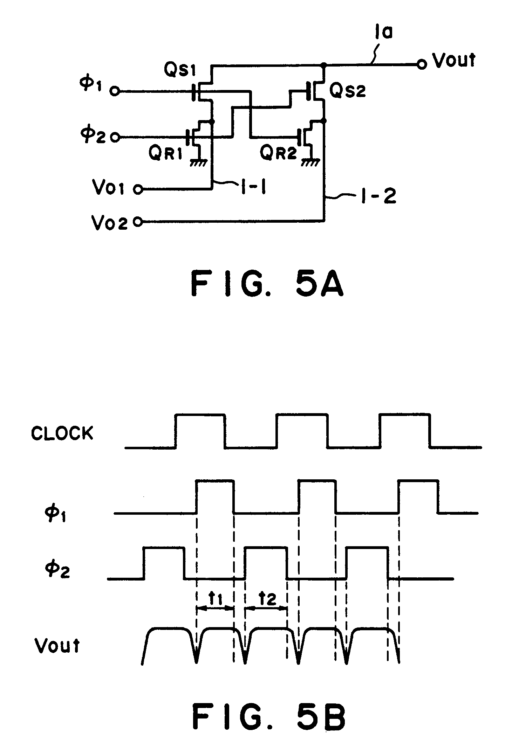

Fig. 5A is a circuit diagram showing an arrangement of the analog switch circuit having a reset circuit.

Fig. 5B is a timing chart showing waveforms of signals for driving the analog switch circuit and a waveform of an output signal from the analog switch circuit.

Referring to Fig. 5A, a reset transistor QR1 is connected to the output line 1-1, and a reset transistor QR2 is connected to the output line 1-2. The output line 1-1 is connected to a transistor QS1. An input pulse ø1 is input to the gate electrodes of the transistors QS1 and QR2. The output line 1-2 is connected to the transistor QS2, and an input pulse ø2 is input to the gate electrodes of the transistors QS2 and QR1.

A drive operation of the analog switch circuit will be described below.

Referring to Fig. 5B, of the two-phase clock pulses ø1 and ø2 generated by the fundamental clock signal, the clock pulse ø1 is kept ON during a time interval t1, and the clock pulse ø2 is kept OFF during this interval. In this state, the transistors QS1 and QR2 are kept ON, and the transistors QS2 and QR1 are kept OFF. For this reason, a pixel signal V01 is output from the output line 1-1 to the common output line 1a through the transistor QS1. The output line 1-2 is reset by the transistor QR2. Since the transistor QS2 is kept OFF in this state, only the pixel signal V01 output to the output line 1-1 is read as an output signal Vout.

During a time interval t2, the clock pulse ø2 is kept ON, while the clock pulse ø1 is kept OFF. In this state, the transistors QS2 and QR1 are kept ON, and the transistors QS1 and QR2 are kept OFF. The output line 1-2 is reset during the time interval t1, and a pixel signal V02 upon resetting of the output line 1-2 is read onto the common output line 1a through the transistor QS2. The output line 1-1 is reset by the transistor QR1. At this time, since the transistor QS1 is kept OFF, the output line 1a is not influenced by the transistor QS1, and only the pixel signal V02 read onto the output line 1-2 appears as the output signal Vout.

The above operation is repeated.

As has been described above according to this embodiment, in the image sensor and the photoelectric conversion apparatus, signal access of one of the output lines and resetting of one or two or more other output lines can be simultaneously performed, i.e., simultaneous operations of signal access and resetting can be achieved, so that 100% or almost 100% duty-ratio output read access can be performed and a clock signal having a high frequency can be used.

Since the plurality of output lines are arranged on one side of the array of the light-receiving elements, the circuit arrangement can be simplified, the circuit area can be reduced, and the chip size can be reduced accordingly.

Another embodiment of the present invention will be described in detail with reference to the accompanying drawings.

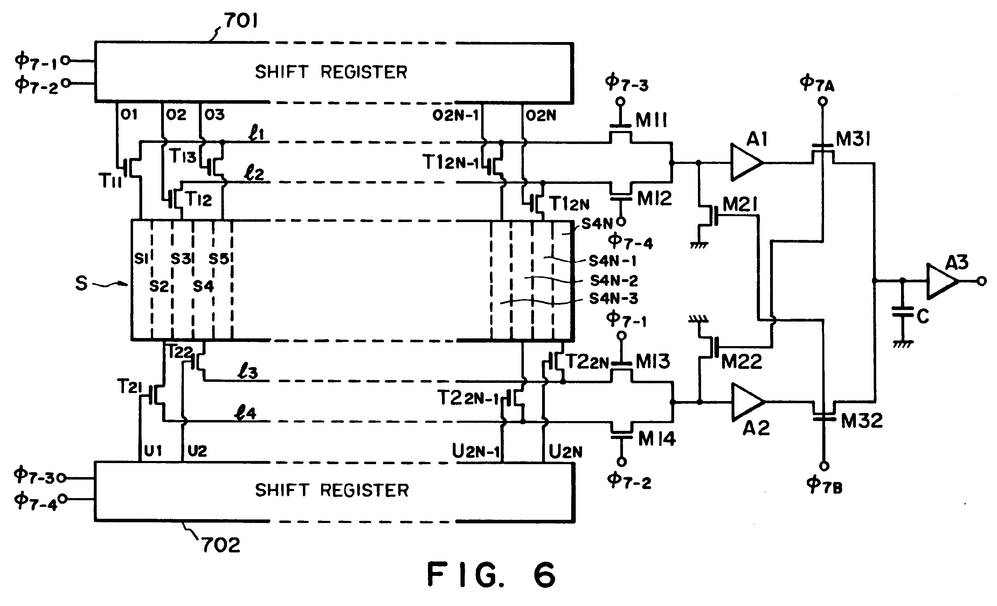

Fig. 6 is a schematic view showing a sensor unit according to the present invention.

Referring to Fig. 6, shift registers 701 and 702 are arranged on both sides of a one-dimensional sensor array S. The shift register 701 is driven at timings determined by clock pulses ø7-1 and ø7-2. The shift register 702 is driven at timings determined by clock pulses ø7-3 and ø7-4.

A control signal corresponding to the clock pulse ø7-1 is output from output terminals O1, O3,..., O2N-1 (N: a predetermined integer; this definition will apply to the following description). MOS transistors T1₁, T1₃,..., T1_{2N-1} are ON/OFF-controlled by this control signal. Similarly, a control signal corresponding to the clock pulse ø2 is output from output terminals O2, O4,..., O2N, and MOS transistors T1₂, T1₄,..., T1_{2N} are ON/OFF-controlled by this control signal.

A control signal corresponding to the clock pulse ø7-3 is output from output terminals U1, U3,..., U2N-1 of the shift register 702, and MOS transistors T2₁, T2₃,..., T2_{2N-1} are ON/OFF-controlled by this control signal. Similarly, a control signal corresponding to the clock pulse ø7-4 is output from output terminals U2, U4,..., U2N, and MOS transistors T2₂, T2₄,..., T2_{2N} are ON/OFF-controlled by this control signal.

Sensor portions S1, S5,..., S4N-3 are connected to the MOS transistors T1₁, T1₃,..., T1_{2N-1}, respectively, and the MOS transistors T1₁ to T1_{2N-1} are connected to a horizontal read line ℓ1.

Sensor portions S3, S7,..., S4N-1 are connected to the MOS transistors T1₂, T1₄,..., T1_{2N}, respectively, and the MOS transistors T1₂ to T1_{2N} are connected to a horizontal read line ℓ2.

Sensor portions S2, S6,..., S4N-2 are connected to the MOS transistors T2₁, T2₃,..., T2_{2N-1}, respectively, and the MOS transistors T2₁ to T2_{2N-1} are connected to a horizontal read line ℓ4.

Sensor portions S4, S8,..., S4N are connected to the MOS transistors T2₂, T2₄,..., T2_{2N}, respectively, and the MOS transistors T2₂ to T2_{2N} are connected to a horizontal read line ℓ3.

The horizontal read lines ℓ1 and ℓ2 are commonly connected through the MOS transistor M1₁ and M1₂ and to the MOS transistor M2₁ and an amplifier A1. The MOS transistors M1₁ and M1₂ are ON/OFF-controlled by the clock pulses ø7-3 and ø7-4.

Similarly, the horizontal read lines ℓ3 and ℓ4 are commonly connected through the MOS transistor M1₃ and M1₄ and to the MOS transistor M2₂ and an amplifier A2. The MOS transistors M1₃ and M1₄ are ON/OFF-controlled by the clock pulses ø7-1 and ø7-2.

The gate of the MOS transistor M2₁ is connected to the gate of the MOS transistor M3₂ and a pulse ø7B is input to these gates. Similarly, the gate of the MOS transistor M2₂ is connected to the gate of the MOS transistor M3₁, and a pulse ø7A is input to these gates.

The sources of the MOS transistors M2₁ and M2₂ are grounded, and the horizontal read lines ℓ1 to ℓ4 are reset in response to the pulses ø7A and ø7B.

Outputs from the amplifiers A1 and A2 are commonly connected through the MOS transistors M3₁ and M3₂, respectively, and to an amplifier A3 and a capacitor C.

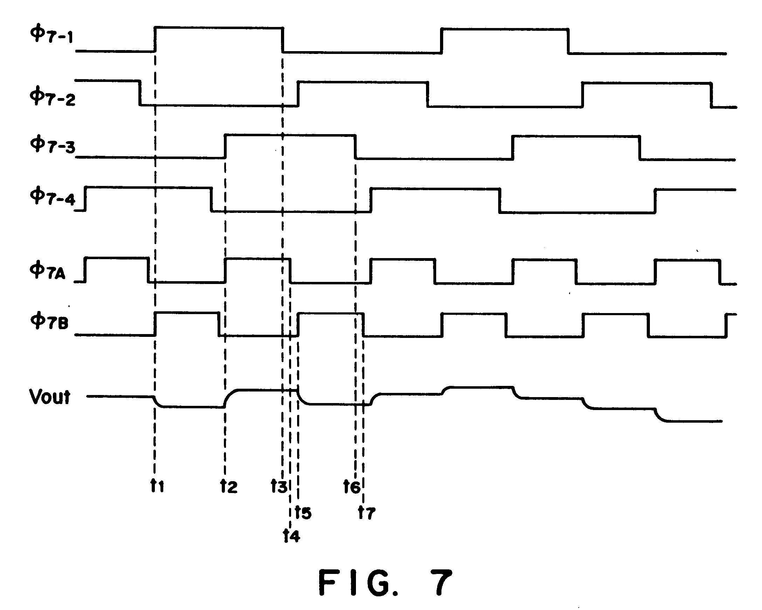

An operation of the sensor unit having the above arrangement will be described with reference to Fig. 7.

Fig. 7 is a timing chart for explaining the operation of the sensor unit of this embodiment.

In the following description, read and reset operations of a signal from a sensor portion S1 will be exemplified. However, since the read and reset operations of the sensor portions S2, S4N, and S3 are partially performed, the read and reset operations of the corresponding portions will also be described.

At time t1, when a control signal corresponding to the clock pulse ø7-1 is output from the output terminal O1 of the shift register 701, the MOS transistor T1₁ is turned on, and a charge stored in the sensor portion S1 is output to the horizontal read line ℓ1.

At this time, since the clock pulse ø7-4 is kept high and the clock pulse ø7B rises, the MOS transistors M1₂ and M2₁ are turned on, and the horizontal read line ℓ2 is reset.

The clock pulses ø7-1 and ø7B rise, and the MOS transistors M1₃ and M3₂ are turned on. The signal from the sensor portion S4N is sampled/held by the capacitor C and output from the amplifier A3.

At time t2, when the clock pulses ø7-3 and ø7A rise, the MOS transistors M1₁ and M3₁ are turned on, and the signal from the sensor portion S1 is sampled/held by the capacitor C. An output VOUT is output from the amplifier A3.

At this time, since the clock pulse ø7-1 is kept high and the clock pulse ø7A rises, the MOS transistors M1₃ and M2₂ are turned on, and the horizontal read line ℓ3 is reset.

At time t3, when the clock pulse ø1 falls, a control signal output from the output terminal O1 of the shift register 1 goes low. The horizontal read line ℓ1 is disconnected from the sensor portion S1.

At time t4, when the clock pulse ø7A falls, the MOS transistor M3₁ is turned off, and the read operation of the signal output from the sensor portion S1 is completed. At this time, the clock pulse ø7-3 is kept high, and the MOS transistor M1₁ is kept ON.

At time t5, when the clock pulse ø7B rises and the MOS transistor M2₁ is turned on, the horizontal read line ℓ1 is reset because the MOS transistor M1₁ is kept ON.

At this time, when the clock pulses ø7-2 and ø7B rise, the MOS transistors M1₄ and M3₂ are turned on, and the signal from the sensor portion S2 is sampled/held by the capacitor C and output from the amplifier A3.

When the clock pulse ø7-3 falls at time t6 and the clock pulse ø7B falls at time t7, the transistors M1₁ and M2₁ are turned off to be ready for the next operation.

The series of read and reset operations are repeated in the order of the horizontal read lines ℓ1, ℓ4, ℓ2, and ℓ3. Serial signals from the sensor portions are sequentially output from the amplifier A3.

The signals from the sensor portion S1 appear on the output side of the amplifier A3 during a time interval between time t2 and time t3. However, a time interval for reading the signals from the sensor portion to the horizontal read line is a time interval between time t1 and time t3, which is twice the time interval between time t2 and time t3.

In the sensor of the sensor unit of this embodiment, sensor portions are aligned in an array, and sensor outputs are electrical signals. If these requirements are satisfied, the type of sensor is not limited to the photoelectric conversion element. A photoelectric conversion apparatus such as an image sensor is required to have a high resolution, and therefore the present invention can be effectively used for this application purpose.

An image reader whose sensor unit is an image sensor will be exemplified below.

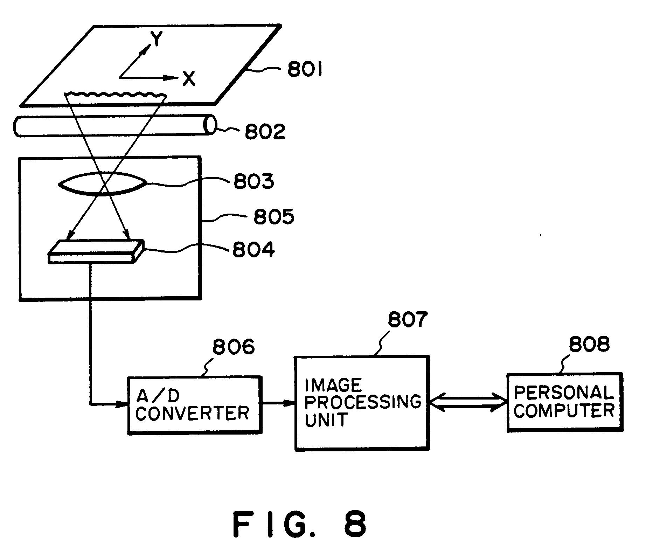

Fig. 8 is a schematic view showing an arrangement of an image reader.

Referring to Fig. 8, an original 801 is mechanically moved relative to a reading section 805 in a direction of an arrow Y. Image reading can be performed by scanning the original 801 in a direction of an arrow X by an image sensor 804. Light from a light source 802 is reflected by the original 801, and the reflected light is focused on the image sensor 804 through a focusing optical system 803. Carriers corresponding to an intensity of incident light are accumulated in the image sensor 804 and photoelectrically converted into an image signal. The image signal is then output from the image sensor 804.

This image signal is converted into a digital signal by an A/D converter 806 and is stored in a memory of an image processing unit 807 as image data. Shading correction, color correction, and the like are performed, and the processed data is transmitted to a personal computer 808 or a printer.

When X-direction image signal transfer is completed as described above, the original 801 is moved relatively in the Y direction, and the above operations are repeated. The entire image of the original 801 can be converted into electrical signals and extracted as image information.

As described above in detail, the sensor unit of this embodiment has the following effects.
(1) The parasitic capacitance of the horizontal read line can be reduced, and signal read efficiency can be improved.
(2) The time for outputting signals onto horizontal read lines can be longer than the time of outputting signals to the output terminal, and signal read efficiency can be improved. For example, signal read efficiency can be improved by setting t1 = 2t2.

As a result, a sensor unit having a high S/N ratio can be obtained.

## Claims

1. An image sensor comprising:
a multiplicity of light receiving elements (6-1,..,6-m; S1,....,S4N) arranged in a one-dimensional array;
a plurality of element output lines (1-1,..,1-n ; ℓ-1,...,ℓ4) connected in sequential order to respective consecutive ones of said light receiving elements (6-1,...,6-m, S1,....S4N);
a plurality of output switching means (QS1, QS2; M31, M32) interposed respectively between respective element output lines (1-1, ...,1-n; ℓ1,...,ℓ4) and a common output line (1a,4,2; A3); and
a plurality of reset means (QR1, QR2; M21, M22) connected respectively to respective element output lines (1-1,...,1-n; ℓ1,...ℓ4);
wherein
respective output switching means (QS1, QS2; M31, M32) and respective reset means (QR2, QR1; M22,M21) connected to different respective element output lines (1-1,...,1-n; ℓ1,...,ℓ4) are electrically coupled (QS1 and QR2, QS2 and QR1; M31 and M22, M32 and M21) by a respective common driving line (ø1, ø2; ø7A, ø7B) whereby said respective output switching means (QS1, QS2; M31,M32) and said coupled respective reset means (QR2, QR1; M22, M21) respectively shall be driven simultaneously to perform concurrent read-out and reset operations.

2. An image sensor as claimed in claim 1 wherein said element output lines (1-1,....,1-n) are all located to one side of said multiplicity of light receiving elements (6-1,...,6-m).

3. An image sensor as claimed in claim 1 wherein said plurality of output switching means (M31,M32) constitute a second-stage switching means, said sensor also including a plurality of first-stage switching means (M11 and M12, M13 and M14) each comprised of a plurality of respective line switching means (M11,M12 and M13,M14) interposed between respective pluralities of said element output lines (ℓ1, ℓ2 and ℓ3,ℓ4) and respective output switching means (M31 and M32).

4. An image sensor as claimed in claim 3 having four element output lines (ℓ1 to ℓ4) connected in two pairs (ℓ1 and ℓ2, ℓ3 and ℓ4), via two respective pairs of line switching means (M11 and M12, M13 and M14), each to a respective one of two output switching means (M31, M32).

5. A photoelectric conversion apparatus including an image sensor as claimed in any preceding claim and control circuit means (3; 701, 702) cooperative therewith for generating and applying clock pulses and corresponding control signals (ø1 to øn; ø7-1 to ø7-4, ø7A, ø7B,) to control read-out of signals from said light receiving elements (6-1,..,6-m; S1, ...S4N) onto said element output lines (1-1,...1-n; ℓ1...ℓ4) and to control operation of said switching means (QS1, QS2; M11 to M14, M31, M32) and said reset means (QR1, QR2; M21, M22).

6. An apparatus as claimed in claim 5 when depending from claim 4 wherein said control circuit means (701,702) is operable to provide clock signals and corresponding control signals (ø7-1 to ø7-4, ø7A, ø7B) the relative sequence and timings (t1 to t7) of which are such that the time period (t1 to t3) effected for reading-out signal from said light receving elements (S1, ..., S4N) onto said element output lines (ℓ1 to ℓ4) ᵢs substantially twice the time period (t2 to t3) effected for reading-out signal from said element output lines (ℓ1 to ℓ4) onto said common output line (A3).

## Patentansprüche

1. Bildsensor, mit:
einem Vielfach von in einer eindimensionalen Anordnung befindlichen lichtempfangenden Elementen (6-1,...,6-m; S1,...,S4N);
einer Vielzahl von in sequentieller Reihenfolge mit den jeweiligen der fortlaufenden lichtempfangenden Elemente (6-1,..., 6-m; S1,...,S4N) verbundenen Elemente-Ausgangsleitungen (1-1,..., ℓ1,...,ℓ4);
einer Vielzahl von in dieser Reihenfolge zwischen den jeweiligen Elemente-Ausgangsleitungen (1-1,...,ℓ1,...,ℓ4) und einer gemeinsame Ausgangsleitung (1a, 4, 2; A3) eingefügten Ausgangsumschaltmitteln (QS1, QS2; M31, M32) und mit
einer Vielzahl von in dieser Reihenfolge mit den jeweiligen Elemente-Ausgangsleitungen (1-1,...,1-n;ℓ1,...,ℓ4) verbundenen Rücksetzmitteln (QR1, QR2; M21, M22); bei dem
die jeweiligen Ausgangsumschaltmittel (QS1, QS2; M31, M32) und die jeweiligen Rücksetzmittel (QR2, QR1; M22, M21), die mit unterschiedlichen der jeweiligen Elemente-Ausgangsleitungen (1-1,...,1-n;ℓ1,...,ℓ4) verbunden sind, durch eine jeweilige gemeinsame Ansteuerleitung (ø1, ø2, ø7A, ø7B) elektrisch gekoppelt (QS1 und QR2, QS2 und QR1; M31 und M22, M32 und M21) sind, wodurch die jeweiligen Ausgangsumschaltmittel (QS1, QS2; M31, M32) bzw. die jeweiligen angekoppelten Rücksetzmittel (QR2, QR1; M22, M21) gleichzeitig angesteuert werden sollen, um gleichzeitig ablaufende Auslese- und Rücksetzvorgänge auszuführen.

2. Bildsensor nach Anspruch 1, dessen Elemente-Ausgangsleitungen (1-1,...,1-n) alle auf einer Seite des Vielfachs lichtempfangender Elemente (6-1,...,6-m) angeordnet sind.

3. Bildsensor nach Anspruch 1, dessen Vielzahl der Ausgangsumschaltmittel (M31, M32) ein Sekundärumschaltmittel bilden, wobei der Sensor auch eine Vielzahl von jeweils aus einer Vielzahl jeweiliger Leitungsumschaltmittel (M11, M12 und M13, M14) gebildeter Primärumschaltmittel (M11, M12 und M13, M14) beinhaltet, die zwischen der jeweiligen Vielzahl der Elemente-Ausgangsleitungen (ℓ1, ℓ2 und ℓ3, ℓ4) und den jeweiligen Ausgangsumschaltmitteln (M31, M32) angeordnet sind.

4. Bildsensor nach Anspruch 3, mit vier zweipaarigen (ℓ1 und ℓ2, ℓ3 und ℓ4) Elemente-Ausgangsleitungen (ℓ1 bis ℓ4), die über jeweilige Paare von Leitungsumschaltmitteln (M11 und M12, M13 und M14) jeweils mit einem eigenen der beiden Ausgangsumschaltmittel (M31, M32) verbunden sind.

5. Photoelektrisches Umwandlungsgerät mit einem Bildsensor nach einem der vorstehenden Ansprüche und mit mit diesem zusammenarbeitenden Steuerschaltungsmitteln (3; 701, 702), die sowohl Taktimpulse erzeugen und anlegen als auch zugeordnete Steuersignale (ø1 bis øn; ø7-1 bis ø7-4, ø7A, ø7B), um das Auslesen der Signale aus den lichtempfangenden Elementen (6-1, ...6-m; S1...S4N) auf die Elemente-Ausgangsleitungen (1-1, ...1-n; ℓ1...ℓ4) und um die Arbeitsweise sowohl der Umschaltmittel (QS1, QS2; M11 bis M14, M31, M32) als auch der Rücksetzmittel (QR1, QR2; M21, M22) zu steuern.

6. Photoelektrisches Umwandlungsgerät nach Anspruch 5, wenn auf Anspruch 4 bezogen, dessen Steuerschaltungsmittel (701, 702) zur Erzeugung von Taktimpulsen und zugeoordneten Steuersignalen (ø7-1 bis ø7-4, ø7A, ø7B) eingerichtet ist, wobei deren relative Abfolge und Zeitgabe (t1 bis t7) so geartet sind, daß die zum Signalauslesen aus den lichtempfangenden Elementen (S1,..., S4N) auf die Elemente-Ausgangsleitungen (ℓ1...ℓ4) bewirkte Zeitdauer (t1 bis t3) im wesentlichen der zweifachen Zeitdauer (t2 bis t3) entspricht, die zum Signalauslesen aus den Elemente-Ausgangsleitungen (ℓ1...ℓ4) auf die gemeinsame Ausgangsleitung (A3) bewirkt wird.

## Revendications

1. Détecteur d'image comprenant:
une multiplicité d'éléments récepteurs de lumière (6-1,.., 6-m; S1, ..., S4N) agencés selon un réseau à une dimension;
une pluralité de lignes de sortie d'éléments (1-1,.., 1-n); ℓ1,..., ℓ4) connectées selon un ordre séquentiel à des éléments consécutifs respectifs desdits éléments récepteurs de la lumière (6-1,..., 6-m, S1, ....S4N);
une pluralité de moyens de commutation de sortie (QS1, QS2; M31, M32) interposés respectivement entre les lignes de sortie d'éléments respectifs (1-1, ... 1-n; ℓ1, ..., ℓ4) et une ligne de sortie commune (1a, 4, 2; A3); et
une pluralité de moyens de remise à l'état initial (QR1, QR2; M21, M22) connectés respectivement aux lignes de sortie d'éléments respectifs (1-1, ..., 1-n; ℓ1, ...ℓ4);
dans lequel
les moyens de commutation de sortie respectifs (QS1, QS2; M31, M32) et les moyens de remise à l'état initial respectifs (QR2, QR1; M22, M21) connectés à différentes lignes de sortie d'éléments respectives (1-1, ..., 1-n; ℓ1, ..., ℓ4) sont couplés électriquement (QS1 et QR2, QS2 et QR1; M31 et M22, M32 et M21) par une ligne de commande commune respective (ø1, ø2; ø7A, ø7B), grâce à quoi lesdits moyens de commutation de sortie respectifs (QS1, QS2; M31 , M32) et lesdits moyens de remise à l'état initial respectifs couplés (QR2, QR1; M22, M21) seront respectivement commandés simultanément pour effectuer des opérations simultanées de lecture et de remise à l'état initial.

2. Détecteur d'image selon la revendication 1, dans lequel lesdites lignes de sortie d'éléments (1-1, ..., 1-n) sont toutes localisées d'un côté de ladite multiplicité d'éléments récepteurs de la lumière (6-1, ..., 6-m).

3. Détecteur d'image selon la revendication 1, dans lequel ladite pluralité de moyens de commutation de sortie (M31, M32) constitue un moyen de commutation de second étage, ledit détecteur comprenant aussi une pluralité de moyens de commutation de premier étage (M11 et M12, M13 et M14) constitués chacun d'une pluralité de moyens respectifs de commutation de lignes (M11, M12 et M13, M14) interposés entre des pluralités respectives desdites lignes de sortie d'éléments (ℓ1, ℓ2 et ℓ3, ℓ4) et des moyens respectifs de commutation de sortie (M31 et M32).

4. Détecteur d'image selon la revendication 3 ayant quatre lignes de sortie d'éléments (ℓ1 à ℓ4) connectées en deux paires (ℓ1 et ℓ2, ℓ3 et ℓ4), par l'intermédiaire de deux paires respectives de moyens de commutation de lignes (M11 et M12, M13 et M14), chacune à un moyen respectif de deux moyens de commutation de sortie (M31, M32).

5. Appareil de conversion photoélectrique comprenant un détecteur d'image selon l'une quelconque des revendications précédentes et des moyens à circuit de commande (3; 701, 702) coopérant avec celui-ci pour générer et appliquer des impulsions d'horloge et des signaux de commande correspondants (ø1 à øn; ø7-1 à ø7-4, ø7A, ø7B) pour la commande de la lecture de signaux en provenance desdîts éléments récepteurs de lumière (6-1,..., 6-m; S1, ...S4N) sur lesdites lignes de sortie d'éléments (1-1, ... 1-n; ℓ1... ℓ4) et pour la commande du fonctionnement desdits moyens de commutation (QS1, QS2; M11 à M14, M31, M32) et desdits moyens de remise à l'état initial (QR1, QR2; M21, M22).

6. Appareil selon la revendication 5 lorsqu'elle dépend de la revendication 4, dans lequel lesdits moyens à circuit de commande (701, 702) peuvent fonctionner pour fournir des signaux d'horloge et des signaux de commande correspondants (ø-1 à ø7-4, ø7A, ø7B) dont la séquence et les synchronisations relatives (t1 à t7) sont telles que la période de temps (t1 à t3) écoulée pour la lecture du signal en provenance desdits éléments récepteurs de lumière (S1, ..., S4N) sur lesdites lignes de sortie d'éléments (ℓ1 à ℓ4) est sensiblement le double de la période de temps (t2 à t3) écoulée pour lire le signal en provenance desdites lignes de sortie d'éléments (ℓ1 à ℓ4) sur ladite ligne de sortie commune (A3).
